# EUROPEAN PATENT SPECIFICATION

(11) **EP 1 103 805 B1**
(45) Date of publication and mention of the grant of the patent: **10.01.2007**
(21) Application number: 00307025.7
(22) Date of filing: 16.08.2000
(51) Int. Cl.: G01N 21/91, G02B 5/28

(54) **Ultraviolet light permeable filter for flaw detection apparatus and method for detection of flaws**
Für ultraviolettes Licht durchlässiger Filter für eine Vorrichtung zum Nachweis von Oberflächenfehlern und Verfahren zu deren Nachweis
Filtre perméable à la lumière ultraviolette pour un appareil de détection de défauts et procédé de détection de défauts

(30) Priority: 29.11.1999 JP 33804199
(43) Date of publication of application: 30.05.2001
(73) Proprietor: Marktec Corporation, Ohtaku, Tokyo (JP)
(72) Inventor: Motoyama, Masami, Marktec Corp. Narita Factory, Katori-gun, Chiba-ken (JP)
(74) Representative: Ward, David Ian

(56) References cited:
- EP-A- 0 932 058
- WO-A-98/20365
- WO-A-99/15922
- WO-A-99/53299
- US-A- 5 493 442
- "FILTER ENHANCES FLUORESCENT-PENETRANT-INSPECTING BORESCOPE" NTIS TECH NOTES, US DEPARTMENT OF COMMERCE. SPRINGFIELD, VA, US, 1 July 1990 (1990-07-01), page 582 XP000149194 ISSN: 0889-8464
- RIESS N: "OPTIMIZATION OF MAGNETIC POWDER TESTING WITH ULTRAVIOLET LIGHT1)" SCHWEISSEN UND SCHNEIDEN, DEUTSCHER VERLAG FUR SCHWEISSTECHNIK. DUSSELDORF, DE, vol. 45, no. 6, 1 June 1993 (1993-06-01), pages E106-E108, XP000368656 ISSN: 0036-7184

## Description

### BACKGROUND OF THE INVENTION

The present invention relates to an ultraviolet light permeable filter for a flaw detection apparatus and a method for the detection of flaws.

In the prior art, according to JIS(Japan Industrial Standard), in order to perform a fluorescent penetrant liquid detection test and a fluorescent magnetic powder detection (=magnaflux) test, an ultraviolet detection light source (also called a "black" light by those skilled in the art) is adopted, wherein light is emitted from a metal halide lamp and is passed through an ultraviolet light permeable filter so that the fluorescent penetrant liquid (or fluorescent magnetic powder) is excited to emit radiation.

For example, in the method described above an ultraviolet flaw detection apparatus comprising the metal halide lamp and an ultraviolet light permeable filter having a minimum wavelength of 385±5 nm which can be recognised with normal eyesight is provided. An inspector can reduce fatigue or avoid mistakes caused by fatigue from the blue-violet radiation by using a wavelength below 400 nm.

In the field test of the fluorescent penetrant liquid method or the fluorescent magnetic powder method for checking a flaw on an irregular surface in a minor area where a currently marketed ultraviolet flaw detection apparatus comprising the ultraviolet light permeable filter and the metal halide lamp is used, a serious problem exists. The inspector has difficulty in checking the flaw because he is forced to recognise with his eyes a reddish halation mixed by a red and pale blue radiations which are caused by reflected light from a test display according to the angle between radiated light and the inspector's eyes toward the display. If the flaw exists on the spot of the halation, especially a reddish halation, the inspector can fail to notice such flaw. As a result, accurate flaw detection cannot be attained by the inspection on an irregular surface in a minor area for finished work.

### SUMMARY OF THE INVENTION

The present inventor has done research and experiments to provide an ultraviolet light permeable filter which prevents the occurrence of halation, especially reddish halation which is the main cause of overlooking a flaw during inspection. As a result, the inventor has confirmed that visible radiation in the wavelength ranges of 380 nm to 410 nm and 694 nm to 780 nm passes through a known ultraviolet light permeable filter. This prior art filter is used with various kinds of ultraviolet flaw detection light sources composed of metal halide lamps. The radiation in the above ranges reflects on the test display to produce a reddish halation. At the same time, the inventor has found that the reddish halation is avoided when the radiation in the wavelength range of 694 nm to 780 nm does not pass through the filter.

In order to achieve the above effect, the following procedures are adopted.

This invention provides a filter device comprising a dielectric multi-film layer which is formed, in use, on the surface of an ultraviolet light permeable filter, wherein visible radiation in the range of 413 nm to 780 nm is reflected by the filter and does not pass therethrough.

The invention also provides a device comprising a filter where the dielectric multi-film layer is composed in a stack in which layers of relatively low refractivity material alternate with layers of relatively high refractivity material.

This invention further provides a device of any filter as mentioned so far where the multi-film layer comprises a layer of relatively high refractivity material which is sandwiched between layers of relatively low refractivity material and the obtained composite is a plurality of layers thick.

Further the invention resides in any flaw detection light source equipped with any of said filters of the present invention.

### BRIEF DESCRIPTION OF THE DRAWINGS

FIG.1 is a partial diagrammatic longitudinal section of a first embodiment of an ultraviolet light permeable filter according to the present invention.
FIG.2 shows part of the filter of Fig 1 in greater detail.
FIG.3 shows part of the filter of Fig 1 in still greater detail.
FIG.4 is a partial diagrammatic longitudinal section of a second embodiment of an ultraviolet light permeable filter according to the present invention.
FIG.5 shows part of the filter of Fig 4 in greater detail.
FIG.6 is a partially schematic side view of a prior art flaw detection apparatus.
FIG.7 is a spectrophotometric curve of light permeability against wavelength for a known halide lamp with no filter equipped.
FIG.8 is a spectrophotometric curve of light permeability against wavelength for the same halide lamp as Fig 7, equipped with a prior ultraviolet light permeable filter.
FIGS.9 to 11 are spectrophotometric curves of light permeability against wavelength for the same halide lamp of Fig 7 equipped with different filters according to the present invention.

### DETAILED DESCRIPTIONS OF THE PREFERRED EMBODIMENT

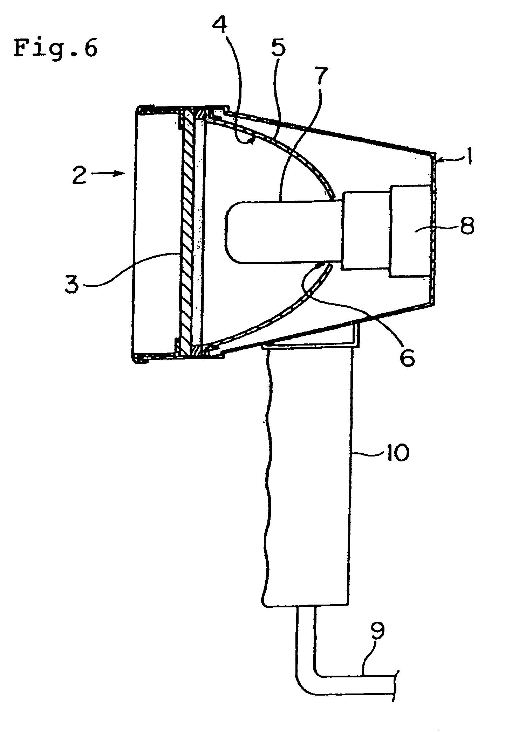

Referring to Fig 6, a known flaw detection apparatus is shown. The apparatus comprises a lamp housing in the form of a metal shell (1) having an opening (2) on one side for permitting the passage of light therethrough in use, an uncoated glass filter (3), a concave reflector mirror (5) having an anodised mirror face (4) and a metal halide lamp (7). The lamp (7) is mounted on a socket (8) at an opposite side of the housing to the opening (2). The reflector mirror (5) has a hole drilled through its centre and is mounted in the housing such that the lamp (7) projects through the hole (6) and in such a manner that in use, light emitted from the lamp (7) reflects off the anodised mirror face (4) and is directed towards the opening (2). The filter (3) is mounted in the housing adjacent the opening (2) such that light from the lamp (7) passes through the filter (3) before leaving the housing. Power for the lamp is provided by a binary power supply cord (9) which is connected to an inverter (not shown) externally of the metal shell (1). The apparatus also includes a handle (10) through which the cord (9) passes.

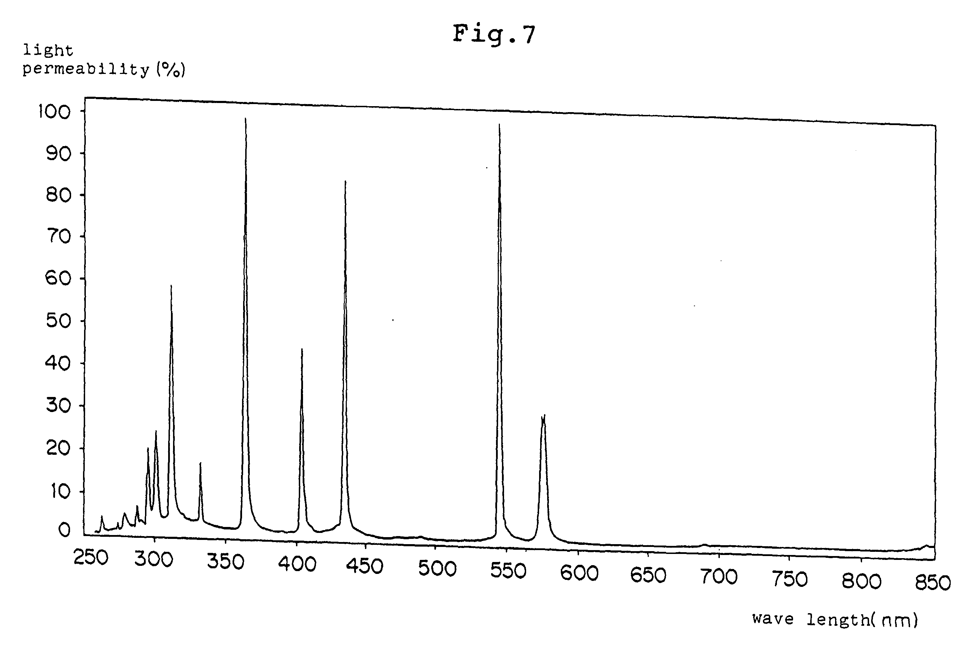

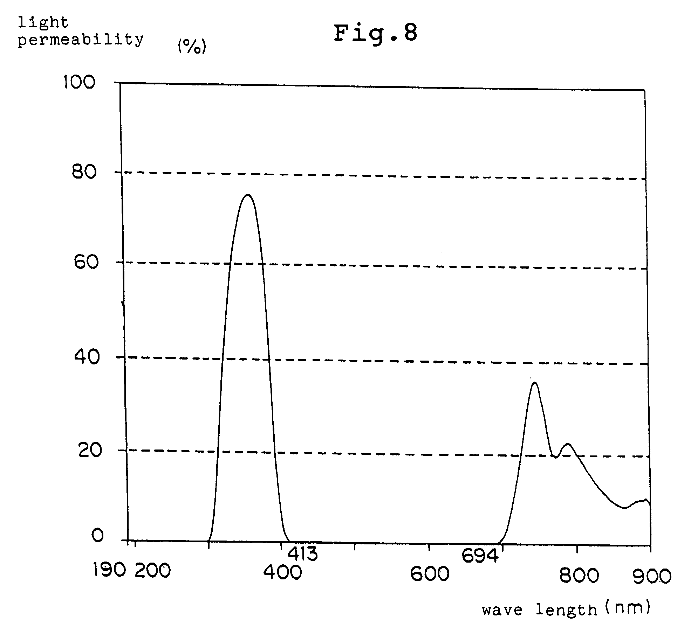

The lamp (7) is marketed under the name "70W/FDA" by Marktec Corporation. The filter (3) is marketed under the name "D10FA", also by Marktec Corporation. Fig 7 is a spectrophotometric curve of light permeability (%) plotted against wavelength (nm) for the 70W/FDA lamp. Fig 8 is a similar spectrophotometric curve for the same lamp fitted with the D10FA filter. As can be seen from Fig 8, this prior art filter absorbs visible radiation in the wavelength region of from 413 nm to 694 nm, whereas radiation in a wavelength range of from 380 nm to 413 nm and 694 nm to 780 nm penetrates therethrough (the spectrophotometric curves were obtained using a special spectrophotometer developed and supplied by Shimadzu Seisakusho Co., Ltd., model No. U-2200).

### FLAW DETECTION TEST

Experimental Material : Polished steel square column, 50x50mm section, 200mm long.
Scratch : Natural scratch 20mm long and 0.12mm deep on the polished surface.
Fluorescent magnetic powder : "Supermagna LY-50" supplied by Marktec Corporation.
Density of magnetic powder : 0.5g/l
Dispersing agent : "BC-1" supplied by Marktec Corporation.
Density of dispersing agent : 2g/l
Electric current value of magnetisation : DC-500A

Under the above conditions, several visual observation tests were performed to observe any occurrence of halation on the indicated scratch.

As a first test, a prior art flaw detection light source was equipped with an ultraviolet light permeable glass filter and a fluorescent magnetic powder test was performed. As a result, a pale blue halation could not be observed, but a reddish halation was observed, which caused overlooking of the indicated scratch.

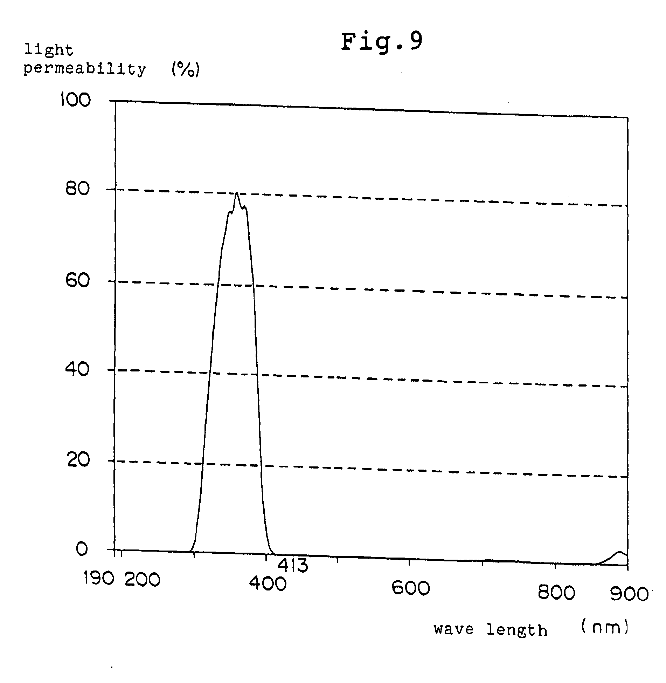

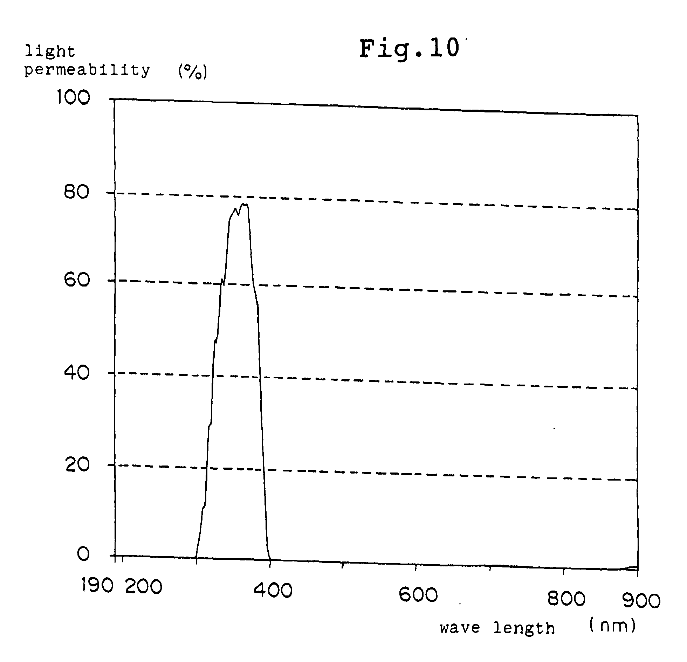

In order to improve the result, instead of the prior art filter, two kinds of the newly invented filters provided with a dielectric multi-film layer obtained by a vacuum evaporation method were tested. The filters exhibited the spectrophotometric curve shown in FIG.9 and FIG.10

As a second test, the filter which causes the visible radiation over the wavelength of 700 nm to reflect and which has the spectrophotometric curve of FIG.9 was equipped to a flaw detection apparatus and the fluorescent magnetic powder test was performed. As a result, the pale blue halation was observed while the reddish halation was not observed. The indicated scratch was clearly observed.

As a third test, the filter which causes the visible radiation in the wavelengths of 400 nm to 410 nm and over about 700 nm to reflect and which has the spectrophotometric of the curve of FIG. 10 was equipped to a flaw detection apparatus and the fluorescent magnetic powder test was performed. As a result, the pale blue halation was observed to a small extent while the reddish halation was not observed. As with the second test, the indicated scratch was clearly observed.

From the results of the above three experiments, the inventor realised that the radiation in the wavelength of about 700 nm is observed as a reddish halation and that the occurrence of this halation was the true source of an inspector's mistake. Therefore, the inventor has developed an ultraviolet light permeable filter which causes the radiation to reflect and not to penetrate in a wavelength range from about 700 nm to 780 nm. When this filter is equipped to a flaw detection apparatus, the satisfactory result has been confirmed.

Now, actual embodiments of the present invention are described with reference to the attached drawings.

### Embodiment 1:

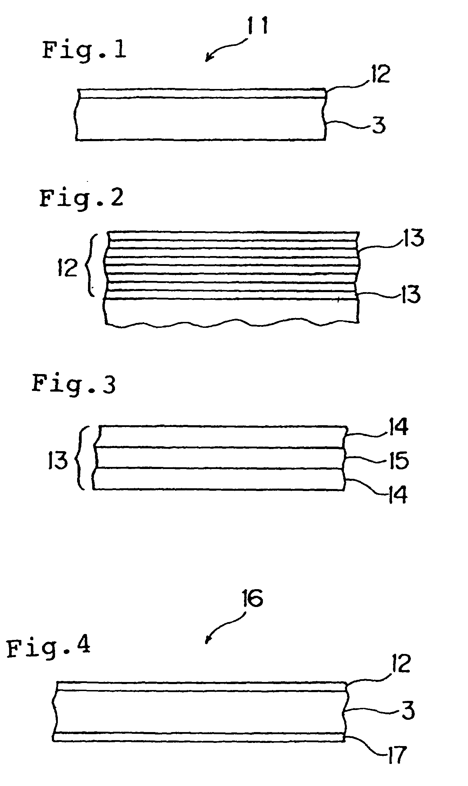

Fig 1 is a partial diagrammatic longitudinal section of an ultraviolet light permeable filter (11) for use in a flaw detection apparatus. The filter (11) comprises a glass substrate (3) with a dielectric multi-film layer (12) coated thereon. Fig 2 shows the layer (12) in more detail. As can be seen from Fig 3, the layer (12) consists of a plurality of composite layers (13), each composite layer (13) being composed of three individual layers (14) and (15). The individual layers which comprise the composite layer (13) consist of a high refractivity material (15) sandwiched between two layers of a low refractivity material (14). (The expressions "high" and "low" used to describe the refractivity of the individual materials of a composite layer are relative not absolute, i.e. the "high" refractivity material has a high refractivity relative to the low refractivity material and vice versa.) In the embodiment illustrated, eight such composite layers (13) are provided on the glass substrate (3). The filter (11) so formed reflects visible radiation in a wavelength range of from 694 nm to 780 nm.

The dielectric multi-film layer (12) may be formed by coating individual thin layers by vapour deposition, such as a vacuum evaporation method or an ion plating method so that the wavelength range which can pass through the filter is selectively controlled. Such vapour deposition methods are relatively inexpensive.

Suitable examples of materials for the high refractivity layers are hafnium oxide (HfO₂), titanium oxide (TiO₂), zirconium oxide (ZrO₂) and zinc sulphide (ZnS). Examples of materials suitable for the low refractivity layers are silicon oxide (SiO₂), magnesium fluoride (MgF₂) and cryolite (Na₈AlF₆).

### Example 1

On one surface of an ultraviolet light permeable glass filter (D10FA), a multi-film dielectric layer 12 is formed by vacuum thin film evaporation treatment using an automatic successive vacuum thin film forming machine (CES-3 supplied by Kabushiki Kaisha Synchron). The first layer (14) to be coated is silicon oxide material having a low refractivity (layer thickness 146 nm) upon which is subsequently coated a titanium oxide layer having a high refractivity (layer thickness 520 nm). A further layer (14) of the same low refractivity silicon oxide material (thickness 146 nm) is coated thereon to give a composite layer (13) comprising a high refractivity layer (15) sandwiched between two low refractivity layers (14). Subsequent layers were coated until eight composite layers (13) were formed on the glass substrate (3). By this method, the ultraviolet light permeable filter (11) obtained is as shown in Figs 1 to 3. The spectrophotometric curve for the filter (11) is as shown in Fig 9, with visible radiation of wavelengths 694 to 780 reflecting on the filter and not passing therethrough.

The filter (11) so obtained was then equipped to a flaw detection apparatus (super light D-10 supplied by Marktec Corporation having a metal halide lamp 70WFDA). The apparatus was tested under the following conditions:
Experimental Material : Polished steel square column, 50x50mm section, 200mm long.
Scratch : Natural scratch 20mm long and 0.12mm deep on the polished surface.
Fluorescent magnetic powder : "Supermagna LY-50" supplied by Marktec Corporation.
Density of magnetic powder : 0.5g/l
Dispersing agent : "BC-1" supplied by Marktec Corporation.
Density of dispersing agent : 2g/l
Electric current value of magnetisation : DC-500A

As a result of the test, pale blue halation is observed while reddish halation is not observed, and the indicated scratch is clearly observed.

It will be understood that other configurations for the multi-film layer (12) are possible within the scope of the present invention. For example, more or less than eight composite layers (13) may be provided. When the number of layers is increased, for example, the degree of reflection of the radiation for particular wavelengths can be properly controlled. Alternatively or in addition, each composite layer (13) may comprise a low refractivity material sandwiched between two high refractivity materials. As a further alternative, each composite layer (13) may consist of only a low refractivity material and a high refractivity material, with either the high refractivity or low refractivity material being the first layer on the glass substrate (3).

Furthermore, there is no requirement that alternate low refractivity and high refractivity layers be made from the same low refractivity material or high refractivity material respectively.

### Embodiment 2

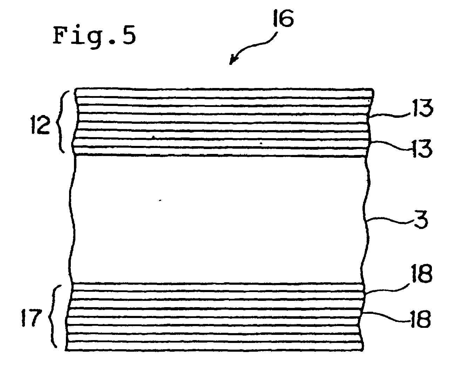

Referring to Figs 4 and 5, a second embodiment of an ultraviolet light permeable filter (16) in accordance with the present invention is shown. The glass substrate (3) is coated on one side with eight composite layers (13) which are as described with reference to Figs 1 to 3. The opposite side of the glass substrate (3) is coated with a multi-film layer (17) having eight composite layers (18). Each composite layer (18) comprises a layer of high refractivity material sandwiched between two layers of low refractivity material. The composition of the layers (18) is chosen such that visible radiation at wavelengths of from 400 nm to 410 nm is reflected and does not pass through the multi-film layer (17).

### Example 2.

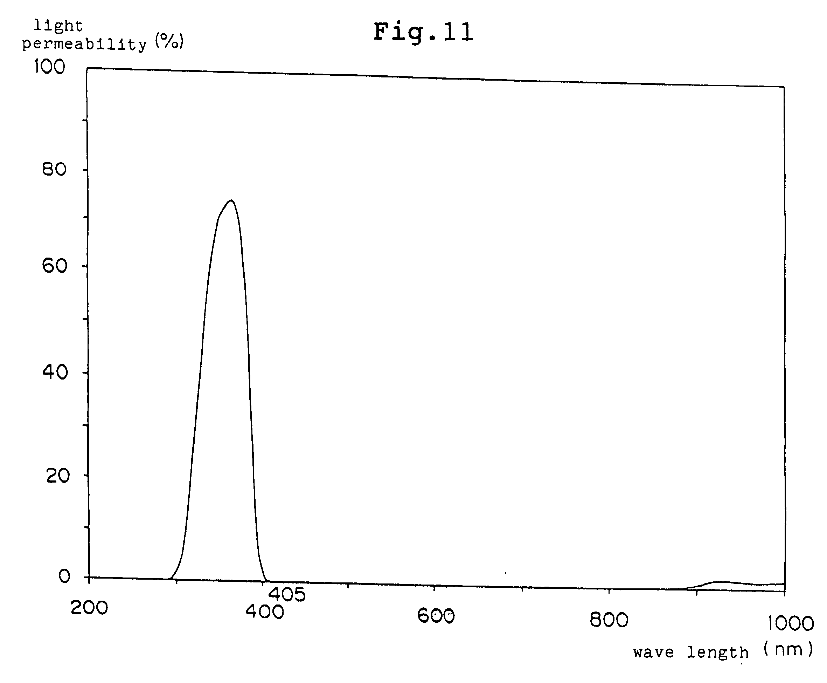

The filter (11) of Example 1 was coated on its uncoated side with a multi-film layer (17). The multi-film layer (17) was produced by the same vacuum thin film evaporation method as described with reference to Example 1. Each composite layer (18) comprises a layer of high refractivity titanium oxide material (layer thickness 325 nm) sandwiched between layers of a low refractivity silicon oxide material (each layer thickness 91 nm). Eight such composite layers (18) were formed. The resultant filter (16) exhibited a spectrophotometric curve as shown in Fig 11, which confirms that visible radiation having a wavelength of between 405 nm and 410 nm is reflected by the filter (16) and does not penetrate therethrough. The filter (16) was tested in a flaw detection method in the manner described with reference to Example 1. No halation was present and there was good observation of the indicated scratch.

### Example 3

A filter is coated on one side in the same manner as Example 1 to give the same general layer structure. The only difference being that the low refractivity material used was magnesium fluoride (layer thickness 138 nm) and the high refractivity material used was hafnium oxide (layer thickness 440 nm). The filter so obtained gave a similar spectrophotometric curve to that shown in Fig 9 for Example 1 (i.e. visible radiation in the wavelengths of from 694 nm to 780 nm was reflected by the filter and did not penetrate therethrough). When subjected to a flaw detection test in the same manner as described with reference to Example 1, blue halation was observed but reddish halation was not. As a result, the indicated scratch was clearly observed.

### Example 4

A filter was formed having the same general layer structures as Example 2. The multi-film layer (12) on one side of the filter substrate was the same as that of Example 3 (each composite layer (13) consisting of a hafnium oxide layer (440 nm thick) sandwiched between two magnesium fluoride layers (each 138 nm thick)). On the other side of the filter substrate, each composite layer (18) of the second multi-film layer (17) was formed of a layer of high refractivity titanium oxide (layer thickness 325 nm) sandwiched between two low refractivity magnesium fluoride layers (each layer thickness 138 nm). Thus, an ultraviolet light permeable filter having the structure shown in Figs 4 and 5 was obtained. The spectrophotometric curve was similar to that shown in Fig 11 (i.e. visible radiation of wavelengths from 405 to 410 nm was reflected by the filter and not able to penetrate therethrough). When tested in a flaw detection method in the name manner as Example 1, no halation at all was observed and the indicated scratch was clearly observed under inspection.

As explained above, the present invention provides an ultraviolet light permeable filter for a flaw detection apparatus, the filter reflecting visible radiation in the wavelength range from 694 nm to 780 nm thereby preventing penetration of radiation in that wavelength through the filter. When an ultraviolet flaw detection apparatus is equipped with a filter in accordance with the present invention, the flaws and scratches can be promptly and easily found by inspectors even on plane surfaces and well polished or well finished faces which can be very difficult using the prior art filters.

It is further understood by those skilled in the art that the foregoing description is of preferred embodiments of the invention and that various changes and modifications may be made without departing from the scope thereof.

## Claims

1. An ultraviolet light permeable filter for use in an ultraviolet flaw detection apparatus comprises a glass substrate having a dielectric coating on at least one surface thereof which reflects visible radiation in a wavelength range from 413 nm to 780 nm and prevents penetration of radiation of said wavelength range through the filter.

2. An ultraviolet light permeable filter according to Claim 1, wherein the or each dielectric coating is composed of a plurality of composite layers.

3. An ultraviolet light permeable filter as claimed in Claim 2, wherein the or each composite layer comprises one layer of relatively low refractivity material and one layer of relatively high refractivity material.

4. An ultraviolet light permeable filter as claimed in Claim 2, wherein the or each composite layer comprises a layer of relatively high refractivity material sandwiched between two layers of relatively low refractivity material or a layer of relatively low refractivity material sandwiched between two layers of relatively high refractivity material.

5. An ultraviolet light permeable filter as claimed in Claim 3 or Claim 4, wherein said relatively low refractivity material is selected from Silicon oxide, magnesium fluoride and cryolite (Na₈AlF₆).

6. An ultraviolet light permeable filter as claimed in any one of Claims 3 to 5, wherein said relatively high refractivity material is selected from hafnium oxide, titanium oxide, zirconium oxide and zinc sulphide.

7. A flaw detection apparatus comprising an ultraviolet light source and a filter in accordance with any one Claims 1 to 6.

8. A method of flaw detection on a surface comprising the steps of:
(i) applying a fluorescent material to said surface
(ii) irradiating said surface with an ultraviolet light source which has a visible frequency
(iii) passing light from said light source through a filter in accordance with any one of Claims 1 to 6 such that wavelengths from 413 nm to 780 nm are eliminated, and
(iv) viewing said surface whereby any defects are visible at a wavelength of from 380 nm to 410 nm.

9. The method as claimed in Claim 8, wherein step (i) is achieved using a magnetic powder in a dispersing agent and said method includes an additional step of subjecting the surface to magnetisation before or during step (iv).

10. A multi-layer dielectric coating adapted and constructed for application to a glass substrate whereby to form, when so applied, an ultraviolet light permeable filter in accordance with any one of Claims 1 to 6.

## Patentansprüche

1. Für ultraviolettes Licht durchlässiger Filter zur Verwendung in einer Vorrichtung zum Nachweis von Oberflächenfehlern mit ultraviolettem Licht, umfassend ein Glassubstrat mit einer dielektrischen Beschichtung auf mindestens einer seiner Oberflächen, welche sichtbare Strahlung in einem Wellenlängenbereich von 413 nm bis 780 nm reflektiert und ein Eindringen der Strahlung des genannten Wellenlängenbereichs durch den Filter verhindert.

2. Für ultraviolettes Licht durchlässiger Filter nach Anspruch 1, wobei die oder jede dielektrische Beschichtung aus mehreren Verbundstoffschichten besteht.

3. Für ultraviolettes Licht durchlässiger Filter nach Anspruch 2, wobei die oder jede Verbundstoffschicht eine Materialschicht mit relativ geringem Brechungsvermögen und eine Materialschicht mit relativ hohem Brechungsvermögen umfasst.

4. Für ultraviolettes Licht durchlässiger Filter nach Anspruch 2, wobei die oder jede Verbundstoffschicht eine Materialschicht mit relativ hohem Brechungsvermögen, welche zwischen zwei Materialschichten mit relativ geringem Brechungsvermögen eingelegt ist, oder eine Materialschicht mit relativ geringem Brechungsvermögen umfasst, welche zwischen zwei Materialschichten mit relativ hohem Brechungsvermögen eingelegt ist.

5. Für ultraviolettes Licht durchlässiger Filter nach Anspruch 3 oder 4, wobei das Material mit relativ geringem Brechungsvermögen aus Siliziumoxid, Magnesiumfluorid und Kryolith (Na₈AlF₆) ausgewählt wird.

6. Für ultraviolettes Licht durchlässiger Filter nach einem der Ansprüche 3 bis 5, wobei das Material mit relativ hohem Brechungsvermögen aus Hafniumoxid, Titanoxid, Zirkoniumoxid und Zinksulfid ausgewählt wird.

7. Vorrichtung zum Nachweis von Oberflächenfehlern, umfassend eine ultraviolette Lichtquelle und einen Filter gemäß einem der Ansprüche 1 bis 6.

8. Verfahren zum Nachweis von Oberflächenfehlern auf einer Oberfläche, die folgenden Schritte umfassend:
(i) Aufbringen eines Leuchtstoffmaterials auf die Oberfläche
(ii) Bestrahlen der Oberfläche mit einer ultravioletten Lichtquelle, welche eine sichtbare Frequenz aufweist
(iii) Durchlassen von Licht aus der Lichtquelle durch einen Filter gemäß einem der Ansprüche 1 bis 6, derartig dass Wellenlängen von 413 nm bis 780 nm eliminiert werden, und
(iv) Ansehen der Oberfläche, wobei alle Defekte bei einer Wellenlänge von 380 nm bis 410 nm sichtbar werden.

9. Verfahren nach Anspruch 8, wobei Schritt (i) unter Verwendung eines magnetischen Pulvers in einem Dispersionsmittel erzielt wird und das Verfahren vor oder während Schritt (iv) einen zusätzlichen Schritt des Unterziehens der Oberfläche einer Magnetisierung aufweist.

10. Mehrschichtige, dielektrische Beschichtung, welche zur Anwendung auf ein Glassubstrat eingerichtet und aufgebaut ist, wodurch bei Anwendung ein für ultraviolettes Licht durchlässiger Filter gemäß einem der Ansprüche 1 bis 6 gebildet wird.

## Revendications

1. Filtre perméable à la lumière ultraviolette pour utilisation dans un dispositif à ultraviolet de détection de défaut comprenant un substrat en verre ayant un revêtement diélectrique sur au moins une de ses surfaces qui reflète la radiation visible dans un intervalle de longueur d'onde de 413 nm à 780 nm et empêche la pénétration de la radiation de cet intervalle de longueur d'onde à travers le filtre,

2. Filtre perméable à la lumière ultraviolette selon la revendication 1, dans lequel le ou chaque revêtement diélectrique est(sont) constitué(s) d'une multiplicité de couches composites.

3. Filtre perméable à la lumière ultraviolette comme revendiqué dans la revendication 2, dans lequel la ou chaque couche composite comprend une couche de matériel à réfraction relativement basse et d'une couche de matériel à réfraction relativement élevée.

4. Filtre perméable à la lumière ultraviolette comme revendiqué dans la revendication 2, dans lequel la ou chaque couche composite comprend une couche de matériel à réfraction relativement élevée en sandwich entre deux couches de matériel à réfraction relativement basse ou une couche de matériel à réfraction relativement basse en sandwich entre deux couches de matériel à réfraction relativement élevée.

5. Filtre perméable à la lumière ultraviolette comme revendiqué dans la revendication 3 ou 4, dans lequel le matériel à réfraction relativement basse est sélectionné à partir d'oxyde de silicium, de fluorure de magnésium et de cryolite (Na₈AlF₆).

6. Filtre perméable à la lumière ultraviolette comme revendiqué dans l'une quelconque des revendications 3 à 5, dans lequel le matériel à réfraction relativement élevée est sélectionné à partir d'oxyde d'hafnium, d'oxyde de titane, d'oxyde de zirconium et de sulfure de zinc.

7. Dispositif de détection de défaut constitué d'une source de lumière ultraviolette et d'un filtre selon l'une quelconque des revendications 1 à 6.

8. Méthode de détection de défaut sur une surface comprenant les étapes de:
(i) appliquer un matériel fluorescent sur la surface
(ii) irradier la surface avec une source de lumière ultraviolette qui a une fréquence visible
(iii) passer la lumière de cette source lumineuse à travers un filtre selon l'une quelconque des revendications 1 à 6 de telle façon que les longueurs d'onde entre 413 nm et 780 nm sont éliminées, et
(iv) observer la surface, tout défaut étant visible sous une longueur d'onde de 380 nm à 410 nm.

9. Méthode comme revendiquée dans la revendication 8, dans laquelle l'étape (i) est réalisée en utilisant une poudre magnétique dans un agent dispersant et la méthode comprend une étape additionnelle de soumettre la surface à magnétisation avant ou pendant l'étape (iv).

10. Revêtement diélectrique multi-couches adapté et construit pour application sur un substrat en verre au moyen duquel former, quand ainsi appliqué, un filtre imperméable à la lumière ultraviolette selon l'une quelconque des revendications 1 à 6.
